# DEMANDE DE BREVET EUROPEEN

(11) **EP 1 998 285 A1**
(43) Date de publication de la demande: **03.12.2008**
(21) Numéro de dépôt: 08157090.5
(22) Date de dépôt: 28.05.2008
(51) Int. Cl.: G06T 5/00, G06T 11/00

(54) **Procédé et dispositif de modelisation d'un objet dans une image**

(30) Priorité: 29.05.2007 FR 0755311
(71) Demandeur: France Télécom, 75015 Paris (FR)
(72) Inventeur: Le Gallou, Sylvain, 35700, RENNES (FR); Breton, Gaspard, 35760, SAINT GREGOIRE (FR); Garcia, Christophe, 35700, RENNES (FR)

(57) **Abrégé**

L'invention concerne un procédé de modélisation d'un objet dans une image, utilisant une base d'images, dite base globale, caractérisé en ce que la base globale étant partitionnée en bases focalisées, et comportant une base d'initialisation (BI) transverse aux bases focalisées, la base d'initialisation et chacune des bases focalisées étant respectivement associées à un modèle d'apparence déformable construit à partir de la base considérée, ce procédé comporte les étapes de :
- paramétrage (E1) du modèle d'apparence déformable associé à la base d'initialisation (BI) pour l'adapter à ladite image et obtenir des valeurs de paramètres de contrôle (C₀),
- détermination (E2) d'une ou plusieurs images de la base d'initialisation (BI) pour lesquelles les valeurs des paramètres de contrôle correspondants du modèle d'apparence déformable associé sont les plus proches desdites valeurs de paramètres de contrôle (C₀) obtenues,
- détermination (E3) d'une base focalisée (BF) comportant au moins une parmi la ou les images de la base d'initialisation (BI), et
- paramétrage (E4) du modèle d'apparence déformable associé à la base focalisée (BF) déterminée, pour l'adapter à ladite image.

## Description

La présente invention concerne de manière générale le domaine de l'analyse et du traitement d'images et plus précisément celui de la modélisation des formes et des textures d'objets visuels.

La technique des modèles d'apparence déformables permet notamment une telle modélisation. Un modèle d'apparence déformable est composé d'une forme, ou ensemble de points d'intérêt liés entre eux, et d'une texture. Il est créé à partir d'exemples d'objets visuels sur lesquels des points d'intérêts sont spécifiés, et où les modes de variations conjointes entre les positions de ces points, c'est-à-dire les formes de ces objets, et leurs textures, sont apprises automatiquement à partir d'une Analyse en Composantes Principales (ACP).

Cette technique est très utilisée dans le domaine de l'analyse d'images de visages, pour détecter automatiquement de manière robuste des points d'intérêt dans des images de visage par exemple, et pour suivre en temps réel des éléments faciaux sur une vidéo. Elle ouvre des perspectives de développement de technologies dans de nombreuses applications temps-réel comme le codage vidéo de visages pour la visiophonie, l'animation de visages synthétiques dans un environnement virtuel, la reconnaissance visuelle de la parole, l'analyse d'expressions et d'émotions, mais aussi le suivi et la reconnaissance de visages dans le domaine de la biométrie.

Plusieurs types de modèles d'apparence déformables existent. Les plus simples et les plus performants sont les Modèles Actifs d'Apparence (AAM), introduits par T.F. Cootes et al. dans leur article "Active Appearance Models", publié en 1998 à l'occasion de la cinquième conférence "European Conference on Computer Vision". D'autres modèles d'apparence déformables plus complexes modélisent des facteurs d'apparence supplémentaires à la forme et à la texture d'un visage:
- les modèles déformables "light-field deformable models", décrits par exemple dans l'article "Non-parametric and light-field deformable models", de C.M. Christoudias et al., publié en 2006 dans la revue "Computer Vision and Image Understanding", modélisent également les conditions de luminosité sur un visage,
- et les modèles déformables en trois dimensions, ou "3D Morphable Models", décrits dans l'article "A morphable model for the synthesis of 3D faces", de V.Blanz et al., publié en 1999 à l'occasion de la vingt-sixième conférence "International Conference on Computer graphics and interactive techniques", modélisent également la pose d'un visage, c'est-à-dire son inclinaison d'une position de face à une position de profil.

Avant d'utiliser un modèle d'apparence déformable, une première étape est sa création, à partir d'une base de données d'apprentissage. Une fois le modèle créé, la seconde étape est ensuite son paramétrage pour l'adapter à un objet inconnu que l'on cherche à modéliser, dans une image. Ce paramétrage consiste à trouver les paramètres de contrôle optimaux du modèle, en cherchant à identifier les points de références et la texture de l'objet inconnu. Cette optimisation, qui permet de "plaquer" le modèle au mieux sur la zone de l'image contenant l'objet, est itérative: les paramètres du modèle sont adaptés en fonction de la différence calculée entre l'image analysée et l'image de l'objet modélisé avec le modèle d'apparence, jusqu'à converger vers un modèle final de l'objet.

L'adaptation d'un modèle d'apparence déformable à un objet que l'on souhaite modéliser est liée à la variabilité introduite dans la base de données d'apprentissage lors de sa création. Cette variabilité des objets de la base est générée par le nombre d'objets différents représentés, mais aussi par leurs changements d'apparence sous des prises de vues différentes et sous des illuminations différentes, ou par leurs déformations intrinsèques. Plus la base de données contient de la variabilité, plus le modèle d'apparence déformable créé à partir de cette base est capable de s'adapter à la variabilité de l'objet inconnu à modéliser.

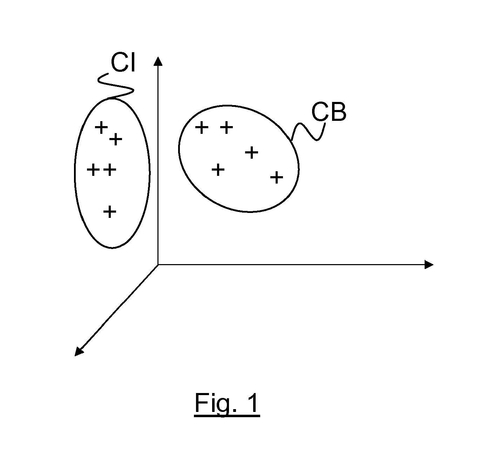

Malheureusement, il est impossible de faire converger un modèle d'apparence déformable créé à partir d'une base de données d'apprentissage contenant beaucoup de variabilité. En effet, plus la variabilité de la base de données, est grande, plus les données représentées dans l'espace des paramètres du modèle d'apparence déformable, représenté à la **figure 1**, forment des "classes". Par exemple si la base de données d'apprentissage contient des images de visage, on distingue dans cette base une classe CI de visages imberbes et une classe CB de visages barbus. Ces classes laissent apparaître des "trous", ou zones sans données, dans l'espace de convergence du modèle d'apparence déformable, ce qui pose problème pour trouver les paramètres optimaux du modèle. Ce problème est aussi connu sous le nom de "problème d'espace varié".

Afin de résoudre ce problème, deux approches existent. La première approche consiste à intégrer dans les modèles d'apparence déformables, un paramètre générateur de variabilité. Cette approche est celle des modèles d'apparence de visages en trois dimensions, ou "3D Morphable Models", cités plus haut. Ces modèles intègrent comme paramètre de contrôle la pose du visage à modéliser, indépendamment des autres paramètres de forme et de texture. Ainsi la convergence d'un tel modèle en trois dimensions n'est pas gênée par la variabilité en pose du visage à modéliser.

Cependant cette première approche ne résout pas le problème d'espace varié pour des paramètres qui ne sont pas intégrés dans les modèles d'apparence déformables construits selon cette approche. Par exemple les modèles d'apparence de visages en trois dimensions ne résolvent pas les problèmes de convergence liés à la variabilité des types de visages. De plus le fait d'intégrer de nouveaux paramètres dans ces modèles les complexifie et les rend plus longs à créer et à faire converger. C'est pourquoi ces modèles sont utilisés pour modéliser des visages connus, c'est-à-dire déjà présents dans la base de données d'apprentissage, et ne sont pas adaptés à la modélisation de visages inconnus en temps réel.

La seconde approche consiste à associer à chacune des classes de l' "espace varié" des paramètres d'un modèle d'apparence déformable, un modèle d'apparence déformable spécialisé. Ainsi lors de la modélisation d'un objet inconnu dans une image, on fait converger chacun de ces modèles spécialisés pour obtenir plusieurs modèles de cet objet, puis on sélectionne comme modèle final celui qui a eu l'erreur la plus faible lors de sa convergence. Plusieurs modèles déformables sont donc optimisés en parallèle. Cette approche est décrite dans l'article "View-based active appearance models" de T.F. Cootes et al., publié en 2000 à l'occasion d'une conférence internationale "Automatic Face and Gesture Recognition".

Cette seconde approche résout le problème d"'espace varié", mais est plus complexe et très consommatrice en temps de calcul par rapport à l'utilisation classique des Modèles Actifs d'Apparence. Notamment elle ne permet pas l'utilisation des modèles d'apparence déformables dans un système temps-réel.

La présente invention a pour but de résoudre les inconvénients de la technique antérieure en fournissant un procédé et un dispositif permettant de modéliser un objet inconnu présent dans un flux d'images en temps réel, de manière robuste à la variabilité de l'objet à modéliser.

A cette fin, l'invention propose un procédé de modélisation d'un objet dans une image, cet objet appartenant à une catégorie d'objets présentant des caractéristiques distinctives communes, et le procédé utilisant une base d'images, dite base globale, représentative de la variabilité de ladite catégorie suivant au moins deux critères de variabilité,
caractérisé en ce que la base globale étant partitionnée en sous-ensembles d'images, dits bases focalisées, et comportant un sous-ensemble d'images, dit base d'initialisation, transverse aux bases focalisées, la base d'initialisation et chacune des bases focalisées étant respectivement associées à un modèle d'apparence déformable construit à partir de la base considérée, ledit procédé comporte les étapes de :
- paramétrage du modèle d'apparence déformable associé à la base d'initialisation pour l'adapter à ladite image et obtenir des valeurs de paramètres de contrôle,
- détermination d'une ou plusieurs images de la base d'initialisation pour lesquelles les paramètres de contrôle correspondants du modèle d'apparence déformable associé sont les plus proches des valeurs de paramètres de contrôle ainsi obtenues,
- détermination d'une base focalisée comportant au moins une image parmi la ou les images de la base d'initialisation ainsi déterminées, et
- paramétrage du modèle d'apparence déformable associé à la base focalisée déterminée, pour l'adapter à ladite image.

Grâce à l'invention, le problème d"'espace varié" est contourné par une sélection en plusieurs étapes d'un sous-ensemble d'images d'une base de données de variabilité importante, ce sous-ensemble étant appelé "base focalisée". Cette base focalisée rassemble les images d'objet les plus proches de l'objet à modéliser ce qui permet d'utiliser un modèle d'apparence déformable adapté à cet objet, ce modèle d'apparence déformable ayant été créé à partir de cette base focalisée.

De plus ce modèle d'apparence déformable comporte un nombre de paramètres de contrôle à optimiser très faible, ce qui permet d'économiser du temps de calcul. En effet, plus la base d'apprentissage servant à créer un modèle d'apparence déformable comporte d'images, plus le nombre de paramètres de contrôle pour optimiser ce modèle, est élevé.

Enfin, les modèles d'apparence déformables associés à chacun des sous-ensembles d'images utilisés dans l'invention sont pré-calculés, ce qui permet de les stocker dans un système embarqué de modélisation d'un objet inconnu dans une image, et de diminuer fortement le temps de calcul. Par exemple l'invention est utilisable pour modéliser en temps réel un visage inconnu dans un flux vidéo. En effet l'invention permet de déterminer rapidement un modèle d'apparence déformable correspondant à ce visage, et d'optimiser ses paramètres sur le visage en temps réel également. Il est ainsi possible de suivre les éléments faciaux d'un visage en temps réel dans des conditions lumineuses variées, ce qui a de nombreuses applications, comme la détermination des expressions de l'interlocuteur humain dans un environnement homme/machine.

Selon une caractéristique préférée, lorsque le procédé de modélisation selon l'invention est utilisé pour modéliser un visage, ladite base globale comportant des images de différents visages suivant plusieurs poses et expressions, ladite base focalisée comporte des images de ladite base globale associées à un nombre limité de visages de ladite base globale, et la base d'initialisation comporte des images de ladite base globale dont les visages ont une expression neutre et une pose frontale.

Ce choix de construction des bases focalisées et de la base d'initialisation permet de modéliser efficacement et rapidement un visage dans un flux vidéo, qui comporte au moins une image de visage neutre et frontale.

Selon une caractéristique préférée, le procédé de modélisation selon l'invention utilise des modèles actifs d'apparence.

Les modèles actifs d'apparence étant plus rapides et plus simples à mettre en oeuvre que les autres types de modèles d'apparence déformables, ce choix permet d'optimiser le procédé selon l'invention.

L'invention concerne aussi un procédé de modélisation d'un objet présent sur un ensemble d'images, utilisant le procédé de modélisation selon l'invention sur une image de l'ensemble d'images, cette image étant sélectionnée, parmi un sous-ensemble d'images de l'ensemble d'images, comme présentant la plus faible erreur de convergence lors d'une adaptation du modèle d'apparence déformable associé à la base d'initialisation, sur ladite image.

Ce procédé de modélisation d'un objet présent sur un ensemble d'images, par exemple dans un flux vidéo, permet d'obtenir rapidement un modèle déformable le plus adapté à l'objet à modéliser.

L'invention concerne aussi un dispositif de modélisation d'un objet dans une image, cet objet appartenant à une catégorie d'objets présentant des caractéristiques distinctives communes, et le dispositif comportant une base d'images, dite base globale, représentative de la variabilité de la catégorie d'objets suivant au moins deux critères de variabilité,
caractérisé en ce que la base globale étant partitionnée en sous-ensembles d'images, dits bases focalisées, et la base globale comportant un sous-ensemble d'images, dit base d'initialisation, transverse aux bases focalisées, la base d'initialisation et chacune des bases focalisées étant respectivement associées à un modèle d'apparence déformable construit à partir de la base considérée, ce dispositif comporte :
- des moyens de paramétrage du modèle d'apparence déformable associé à la base d'initialisation pour l'adapter à ladite image et obtenir des valeurs de paramètres de contrôle,
- des moyens de détermination d'une ou plusieurs images de la base d'initialisation pour lesquelles les valeurs des paramètres de contrôle correspondants du modèle d'apparence déformable associé sont les plus proches des valeurs de paramètres de contrôle obtenues par les moyens de paramétrage,
- des moyens de détermination d'une base focalisée comportant au moins une image parmi la ou les images de la base d'initialisation, et
- des moyens de paramétrage du modèle d'apparence déformable associé à la base focalisée déterminée, pour l'adapter à ladite image.

L'invention concerne également un programme d'ordinateur comportant des instructions pour mettre en oeuvre l'un des procédés de modélisation selon l'invention, lorsqu'il est exécuté sur un ordinateur.

Le dispositif et le programme d'ordinateur présentent des avantages analogues à ceux des procédés selon l'invention.

D'autres caractéristiques et avantages apparaîtront à la lecture d'un mode de réalisation préféré décrit en référence aux figures dans lesquelles :
- la figure 1, déjà commentée en relation avec l'art antérieur, représente l'espace des paramètres d'un modèle d'apparence déformable,
- la figure 2 représente différentes phases du procédé de modélisation selon l'invention,
- la figure 3 représente une base d'images de visages, utilisée pour construire des modèles d'apparence déformables,
- la figure 4 représente un dispositif mettant en oeuvre le procédé de modélisation selon l'invention,
- et la figure 5 représente des étapes du procédé de modélisation selon l'invention tel que décrit dans ce mode de réalisation.

Selon un mode de réalisation préféré de l'invention, le procédé de modélisation selon l'invention est utilisé pour modéliser des visages humains dans un flux vidéo. Cependant le procédé de modélisation selon l'invention est aussi utilisable pour modéliser tout type d'objet appartenant à une catégorie d'objets présentant des caractéristiques distinctives communes, tels que par exemple des voitures.

De plus dans ce mode de réalisation préféré de l'invention, la modélisation de visages s'effectue en utilisant des modèles actifs d'apparence, tels que décrits dans l'article "Active Appearance Models" de T.F. Cootes et al. précité. Cependant il est également possible de réaliser l'invention avec d'autres types de modèles d'apparence déformables, par exemple les modèles d'apparence en trois dimensions cités plus haut, le concept de l'invention reposant sur la sélection en plusieurs étapes d'un modèle d'apparence déformable final.

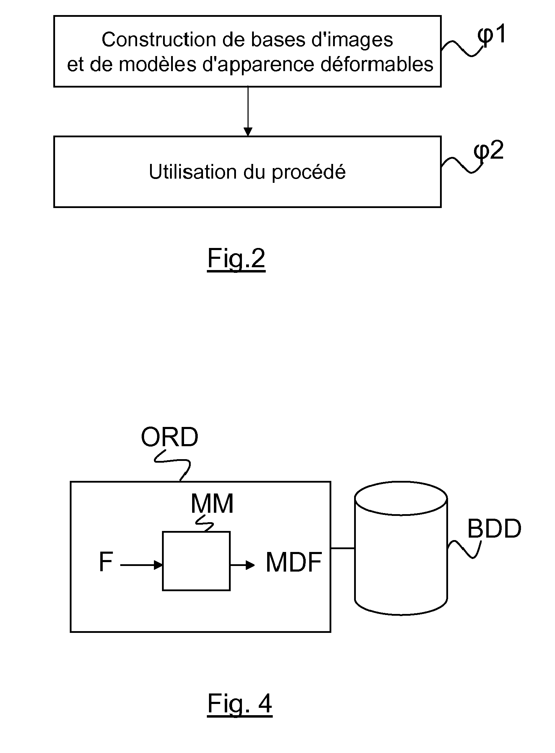

Les modèles actifs d'apparence utilisés par le procédé de modélisation selon l'invention sont créés dans une étape préalable ϕ1 de construction de bases d'images et de modèles actifs d'apparence, représentée à la **figure 2**. Cette phase ϕ1 de construction est effectuée une seule fois préalablement à l'utilisation du procédé de modélisation selon l'invention, dans une phase ϕ2 d'utilisation. Une fois ces bases d'images et ces modèles actifs d'apparence créés, le procédé de modélisation selon l'invention permet de modéliser en temps réel un visage inconnu dans un flux vidéo.

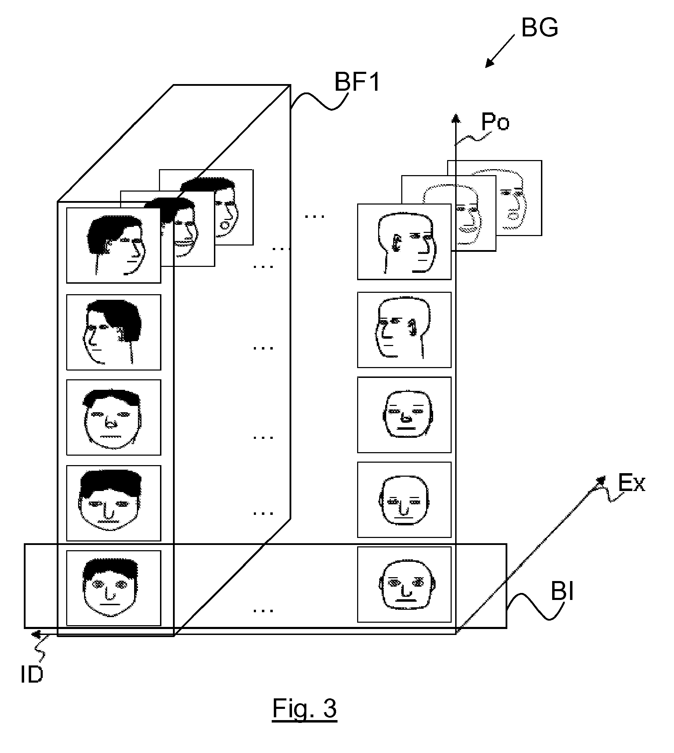

Dans la phase ϕ1 de construction, on utilise une base d'images BG, appelée "base globale" dans la suite, représentée à la **figure 3**, et représentative de la variabilité des visages de différentes personnes. Cette variabilité est notamment exprimée par des identités de personnes différentes, par des poses de visages différentes et par des expressions différentes. Cela permet de classer les images de visages de la base d'images BG suivant trois axes:
- l'axe ID des identités de personnes dont les images de visages sont présentes dans la base d'images BG,
- l'axe Ex des expressions des visages de chacune de ces personnes,
- et l'axe Po des poses des visages de chacune de ces personnes.
Pour chaque personne représentée dans la base globale BG, on a par exemple photographié celle-ci dans une expression neutre, puis prononçant différentes voyelles, et pour chacune de ces expressions on l'a encore photographiée suivant différentes positions de son visage. Ces positions sont par exemple une position frontale, de semi profil gauche, de semi profil droit, vers le haut ou vers le bas. Ces photographies permettent ainsi d'obtenir une base d'images BG de variabilité importante. En variante, d'autres critères de variabilité sont représentés, par exemple utilisant des images de visages photographiés sous différents éclairages.

La base globale BG est partitionnée, dans cette phase ϕ1, en sous-ensembles d'images appelées "bases focalisées" dans la suite. Dans cet exemple de réalisation, chaque base focalisée comporte toutes les images de visages se rapportant à un nombre limité de personnes représentées dans la base globale BG. Par exemple, si la base globale BG comporte des images de visages de vingt-neuf personnes, une base focalisée comporte les images de visages de une à vingt-huit personnes. Afin de faire converger très vite les modèles d'apparence déformables associés à chacune des bases focalisées de cette partition, on choisit de préférence des bases focalisées comportant chacune les images de visages d'une à deux personnes seulement. Ainsi la base focalisée BF1 représentée à la **figure 3** comporte les images du visage d'une seule personne.

Dans cette phase de construction ϕ1, on détermine également un sous-ensemble d'images, dit "base d'initialisation", transverse aux bases focalisées précédemment construites, le terme "transverse" signifiant que les images de la base d'initialisation sont issues d'au moins deux bases focalisées différentes de la base globale (BG). Dans cet exemple de réalisation de l'invention, cette base d'initialisation BI, représentée à la **figure 3**, est l'ensemble des images de la base globale BG, dont les visages ont une expression neutre et une position frontale.

En variante, une autre partition de la base globale et une autre détermination de la base d'initialisation sont effectuées, dans laquelle chaque base focalisée contient par exemple toutes les images de la base globale suivant un nombre réduit de critères de variabilité, par exemple suivant une seule position du visage, et la base d'initialisation contient des images de la base globale suivant un critère de variabilité transverse non représenté par chacune des bases focalisées, par exemple les images de visage d'une seule personne suivant une seule expression, mais suivant toutes les positions de visage représentées.

Dans cette phase ϕ1, on crée également pour chacune des bases focalisées et pour la base d'initialisation, des modèles actifs d'apparence qui leur sont associés. Chacune de ces bases est une base d'images d'apprentissage servant à construire le modèle actif d'apparence qui lui est associé. Ce modèle actif d'apparence est un modèle statistique de forme, de texture et d'apparence. Il comprend des paramètres de contrôle, notamment:
- des paramètres d'apparence, contrôlant la forme et la texture du modèle,
- et des paramètres de pose, contrôlant la position, l'échelle, et l'orientation du modèle.
Ces paramètres permettent de bien représenter les objets appris dans la base d'apprentissage associée au modèle, et d'être ajustés automatiquement afin de reconnaître un nouvel objet inconnu dans une nouvelle image. Notamment, à chaque visage présent dans une image d'une base d'apprentissage, correspond des valeurs de paramètres de pose et d'apparence du modèle actif d'apparence associé à cette base, qui permettent de synthétiser ce visage.

La base globale BG, comprenant les bases focalisées et la base d'initialisation BI, ainsi que les modèles actifs d'apparence associés, sont stockés dans une base de données BDD représentée à la **figure 4**, formant avec l'ordinateur ORD auquel elle est reliée un dispositif de modélisation selon l'invention. Ce dispositif implémente le procédé de modélisation selon l'invention de manière logicielle. La phase ϕ2 d'utilisation du procédé utilise le module logiciel de modélisation MM, qui reçoit en entrée un flux vidéo F et retourne en sortie un modèle déformable MDF dont les paramètres s'adaptent en temps réel au visage présent dans le flux F. On suppose, dans ce mode de réalisation, que ce flux vidéo contient un visage qui n'est pas représenté dans la base globale.

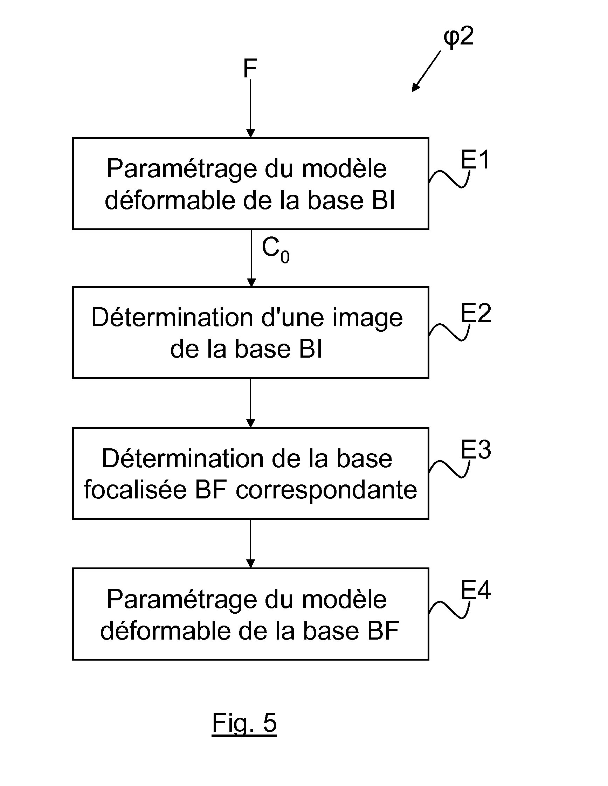

En référence à la **figure 5**, le procédé de modélisation selon l'invention est représenté dans sa phase ϕ2 d'utilisation sous la forme d'un algorithme comportant des étapes E1 à E4, implémentées dans le module logiciel MM.

L'étape E1 est le paramétrage du modèle actif d'apparence associé à la base d'initialisation BI pour l'adapter au visage d'une image du flux vidéo F. Ce paramétrage consiste à faire converger les paramètres de contrôle du modèle actif d'apparence vers des valeurs qui synthétisent un visage le plus proche possible de celui contenu dans l'image considérée. On utilise par exemple pour cela la méthode des "matrices de régression", décrite dans l'article de "Active Appearance Models" de T.F. Cootes et al. précité, ou la méthode d'optimisation dite "en simplex", décrite dans l'article "Face Alignment using Active Appearance Model Optimized by Simplex", de Y. Aidarous et al., publiée à l'occasion d'une conférence "International Conference on Computer Vision Theory and Applications" en 2007.

L'image sur laquelle on paramètre le modèle actif d'apparence, dans cette étape E1, est de préférence choisie de manière à contenir un visage d'expression neutre et en pose frontale, afin d'être facilement modélisable par le modèle actif d'apparence associé à la base d'initialisation BI. Pour sélectionner une telle image, on fait par exemple converger ce modèle sur chaque image des premières images du flux vidéo. L'image présentant la plus faible erreur de convergence est alors sélectionnée.

On extrait de cette convergence du modèle sur cette image, un vecteur C₀ contenant les valeurs des paramètres de contrôle correspondants. Autrement dit, l'adaptation du modèle actif d'apparence associé à la base d'initialisation BI à cette image du flux vidéo donne des paramètres de contrôle de valeurs C₀.

L'étape suivante E2 est la détermination de l'image de la base d'initialisation BI pour laquelle le modèle actif d'apparence associé à la base d'initialisation prend les valeurs de paramètres de contrôle les plus proches des valeurs C₀ déterminées à l'étape E1. A chaque image de la base d'initialisation BI est associé un vecteur contenant les valeurs des paramètres de contrôle du modèle actif d'apparence de la base d'initialisation BI qui font converger celui-ci vers le visage contenu dans cette image. Il suffit donc de calculer, pour chaque image de la base d'initialisation BI, la distance entre le vecteur C₀ et le vecteur associé à cette image. On sélectionne alors, dans cette étape E2, l'image de la base d'initialisation BI pour laquelle cette distance est la plus petite.

En variante, dans cette étape E2, on sélectionne les images de la base d'initialisation BI pour lesquelles cette distance est inférieure à un seuil prédéterminé.

L'étape suivante E3 est la détermination de la base focalisée BF comportant l'image de la base d'initialisation BI déterminée à l'étape E2. Cette image détermine une unique base focalisée BF, puisque l'ensemble des bases focalisées forme une partition de la base globale BG.

En variante, si à l'étape E2 on a sélectionné plusieurs images de la base d'initialisation BI, appartenant à plusieurs bases focalisées, on détermine par exemple dans cette étape E3 la base focalisée qui contient le plus d'images de la base d'initialisation sélectionnées à l'étape E2.

Enfin la dernière étape E4 est le paramétrage du modèle actif d'apparence MDF associé à la base focalisée BF déterminée à l'étape E3 pour l'adapter aux images du flux vidéo F.

Le modèle actif d'apparence MDF choisi à l'issue de ces étapes pour modéliser le visage inconnu présent dans le flux vidéo est celui qui s'adapte le plus facilement à ce visage. De plus, si la base focalisée BF correspondant à ce modèle contient les images de visages de très peu de personnes différentes, par exemple une seule, le nombre de paramètres de contrôle à analyser pour faire converger ce modèle est très faible. Cette caractéristique accélère la convergence du modèle et permet d'utiliser des méthodes d'optimisation comme celle des "matrices de régression", qui n'est pas utilisable en temps réel lorsque le nombre de paramètres de contrôle est important, sur des ordinateurs de puissance moyenne.

## Revendications

1. Procédé de modélisation d'un objet dans une image, ledit objet appartenant à une catégorie d'objets présentant des caractéristiques distinctives communes, et ledit procédé utilisant une base d'images, dite base globale (BG), représentative de la variabilité de ladite catégorie suivant au moins deux critères de variabilité,
**caractérisé en ce que** la base globale (BG) étant partitionnée en sous-ensembles d'images, dits bases focalisées, et comportant un sous-ensemble d'images, dit base d'initialisation (BI), transverse aux bases focalisées, la base d'initialisation et chacune des bases focalisées étant respectivement associées à un modèle d'apparence déformable construit à partir de la base considérée, ledit procédé comporte les étapes de :
- paramétrage (E1) du modèle d'apparence déformable associé à la base d'initialisation (BI) pour l'adapter à ladite image et obtenir des valeurs de paramètres de contrôle (Co),
- détermination (E2) d'une ou plusieurs images de la base d'initialisation (BI) pour lesquelles les valeurs des paramètres de contrôle correspondants du modèle d'apparence déformable associé sont les plus proches desdites valeurs de paramètres de contrôle (C₀) ainsi obtenues,
- détermination (E3) d'une base focalisée (BF) comportant au moins une image parmi la ou les images de la base d'initialisation (BI) ainsi déterminées, et
- paramétrage (E4) du modèle d'apparence déformable (MDF) associé à la base focalisée (BF) déterminée, pour l'adapter à ladite image.

2. Procédé de modélisation d'un visage selon la revendication 1, dans lequel ladite base globale (BG) comporte des images de différents visages suivant plusieurs poses et expressions, **caractérisé en ce qu'**une base focalisée comporte des images de ladite base globale (BG) associées à un nombre limité de visages de ladite base globale (BG), et la base d'initialisation (BI) comporte des images de ladite base globale (BG) dont les visages ont une expression neutre et une pose frontale.

3. Procédé de modélisation selon la revendication 1 ou 2, **caractérisé en ce qu'**il utilise des modèles actifs d'apparence.

4. Procédé de modélisation d'un objet présent sur un ensemble d'images, utilisant le procédé de modélisation selon l'une quelconque des revendications 1 à 3 sur une image dudit ensemble d'images, ladite image étant sélectionnée, parmi un sous-ensemble d'images dudit ensemble d'images, comme présentant la plus faible erreur de convergence lors d'une adaptation du modèle d'apparence déformable associé à la base d'initialisation (BI), sur ladite image.

5. Dispositif (ORD) de modélisation d'un objet dans une image, ledit objet appartenant à une catégorie d'objets présentant des caractéristiques distinctives communes, et ledit dispositif comportant une base d'images, dite base globale (BG), représentative de la variabilité de ladite catégorie suivant au moins deux critères de variabilité,
**caractérisé en ce que** ladite base globale (BG) étant partitionnée en sous-ensembles d'images, dits bases focalisées, et comportant un sous-ensemble d'images, dit base d'initialisation (BI), transverse aux bases focalisées, la base d'initialisation et chacune des bases focalisées étant respectivement associées à un modèle d'apparence déformable construit à partir de la base considérée, ledit dispositif comporte:
- des moyens de paramétrage du modèle d'apparence déformable associé à la base d'initialisation (BI) pour l'adapter à ladite image et obtenir des valeurs de paramètres de contrôle (C₀),
- des moyens de détermination d'une ou plusieurs images de la base d'initialisation (BI) pour lesquelles les valeurs des paramètres de contrôle correspondants du modèle d'apparence déformable associé sont les plus proches desdites valeurs de paramètres de contrôle (C₀) obtenues par lesdits moyens de paramétrage,
- des moyens de détermination d'une base focalisée (BF) comportant au moins image parmi la ou les images de la base d'initialisation (BI), et
- des moyens de paramétrage d'un modèle d'apparence déformable (MDF) associé à la base focalisée (BF) déterminée, pour l'adapter à ladite image.

6. Programme d'ordinateur comportant des instructions pour mettre en oeuvre un procédé selon l'une quelconque des revendications 1 à 4, lorsqu'il est exécuté sur un ordinateur.
